# EUROPÄISCHE PATENTSCHRIFT

(11) **EP 3 883 825 B1**
(45) Veröffentlichungstag und Bekanntmachung des Hinweises auf die Patenterteilung: **06.11.2024**
(21) Anmeldenummer: 19783991.3
(22) Anmeldetag: 25.09.2019
(51) Int. Cl.: B60R 25/40, G07C 9/00

(54) **ZUGANGSVORRICHTUNG FÜR EIN FAHRZEUG**
ACCESS DEVICE FOR A VEHICLE
DISPOSITIF D'ACCÈS POUR UN VÉHICULE

(30) Priorität: 22.11.2018 DE 102018220086
(43) Veröffentlichungstag der Anmeldung: 29.09.2021
(73) Patentinhaber: Continental Automotive Technologies GmbH, 30175 Hannover (DE)
(72) Erfinder: HUSCHENBETT, Matthias, 81737 München (DE)
(74) Vertreter: Continental Corporation
(86) Internationale Anmeldenummer: PCT/EP2019/075932
(87) Internationale Veröffentlichungsnummer: WO 2020/104086

(56) Entgegenhaltungen:
- EP-A1- 2 612 795
- EP-A2- 0 984 124
- WO-A1-2019/072897
- DE-A1- 102011 013 605
- DE-A1- 102011 106 888
- DE-A1- 102016 223 252
- DE-A1- 102017 128 924
- US-A1- 2014 232 322
- US-A1- 2018 186 332

## Beschreibung

Die vorliegende Erfindung betrifft eine Zugangsvorrichtung für ein Fahrzeug, sowie ein Fahrzeug mit einer derartigen Zugangsvorrichtung. Des Weiteren betrifft sie ein Verfahren zum Betreiben einer Zugangsvorrichtung für ein Fahrzeug.

Um einen unbefugten Zutritt zu einem Fahrzeug, insbesondere Kraftfahrzeug zu verhindern, verwenden moderne Zugangsberechtigungssysteme oder Zugangsvorrichtungen in Fahrzeugen elektronische Sicherungssysteme, bei denen zur Authentifizierung des Benutzers eine Datenkommunikation zwischen einer ersten Kommunikationseinrichtung des Fahrzeugs mit einer zweiten Kommunikationseinrichtung in einem mobilen Identifikationsgeber des Benutzers, wie einem Schlüssel oder Schlüsselanhänger, erfolgt. Dabei werden bei einer aktiven Zugangsvorrichtung von dem mobilen Identifikationsgeber Steuersignale sowie ein Identifikationscode, beispielsweise durch Drücken einer entsprechenden Taste durch den Benutzer des mobilen Identifikationsgebers an das Fahrzeug gesendet, woraufhin dieses bei korrektem Identifikationscode entriegelt bzw. verriegelt wird.

Bei einer sog. passiven Zugangsvorrichtung werden zunächst von einer ersten Kommunikationseinrichtung des Fahrzeugs in vorbestimmten regelmäßigen Zeitabständen Anfragesignale oder Lokalisierungssignale mit einer bestimmten Feldstärke ausgesendet, um zu überprüfen, ob sich ein mobiler Identifikationsgeber in einem Annäherungsbereich um das Fahrzeug befindet. Nähert sich ein mobiler Identifikationsgeber dem Fahrzeug und kann schließlich dessen Anfragesignale empfangen, so wird er auf den Empfang eines Anfragesignals antworten, um einen Authentifizierungsvorgang einzuleiten, und gegebenenfalls um die Position des mobilen Identifikationsgebers bezüglich des Fahrzeugs bestimmen zu können. Zur Authentifizierung werden Datentelegramme ausgetauscht, in denen letztlich der mobile Identifikationsgeber seinen Authentifizierungscode dem Fahrzeug übermittelt. Bei erfolgreicher Überprüfung des Authentifizierungscodes ist es dann möglich, dass ein Benutzer, der sich direkt am Fahrzeug befindet, durch Betätigen eines Türgriffs ein Entriegeln der entsprechenden Fahrzeugtür oder aller Fahrzeugtüren initiiert. Da hier kein aktives Betätigen eines mechanischen oder elektrischen Identifikationsgebers bzw. Schlüssels durch einen Benutzer vorgenommen werden muss, wird diese Art der Zugangsberechtigung auch als passive Zugangsberechtigungsprüfung, und die entsprechenden Zugangsvorrichtungen als passive elektronische Zugangsvorrichtungen bezeichnet.

Als nachteilig bei derartigen passiven Zugangsvorrichtungen stellt sich heraus, dass für eine regelmäßige Überprüfung der Präsenz mobilen Identifikationsgebers in der Nähe des Fahrzeugs und gegebenenfalls auch der genauen Position des mobilen Identifikationsgebers bezüglich des Fahrzeugs in der Regel die Anfragesignale bzw. Lokalisierungssignale in kurzen Zeitabständen, d.h. mit einer hohen Rate, ausgesendet werden, um eine stets die Präsenzerfassung bzw. eine genaue Positionsbestimmung und somit einen reibungslosen Betrieb der passiven Zugangsvorrichtung zu gewährleisten. Dies führt jedoch einerseits zu einem hohen Stromverbrauch im Fahrzeug für das Aussenden der Anfragesignale bzw. Lokalisierungssignale, sowie auch im mobilen Identifikationsgeber beim Bearbeiten der empfangenen Signale und beim Aussenden von Antwortsignalen.

Die Druckschrift DE102011106888A1 offenbart eine fernsteuerbare Schließvorrichtung für ein Fahrzeug, aufweisend eine fahrzeugseitige Steuereinrichtung mit einer Sende-/Empfangseinheit zum drahtlosen Datenaustausch mit mindestens einem tragbaren ID-Geber, wobei die Steuereinrichtung ein Polling des ID-Gebers durchführen kann, wobei der ID-Geber einen Sensor zur Erfassung eines Benutzers aufweist und wobei der ID-Geber bei erfasstem Benutzer ein Triggersignal zur Anforderung des Pollings an die Steuereinrichtung absetzt. Insbesondere kann der Sensor eine Bewegung des Benutzers erfassen. Bewegt der Benutzer den ID-Geber, so ist eine bevorstehende Interaktion mit dem Fahrzeug äußerst wahrscheinlich. Hierdurch wird das Polling nur in begründeten Bedarfsfällen gestartet.

Die Druckschrift DE 10 2016 223 252 A1 offenbart eine Zugangsvorrichtung für ein Fahrzeug. Diese hat eine fahrzeugseitige Positionsbestimmungseinrichtung zum Bestimmen der Position eines mobilen Identifikationsgebers bezüglich des Fahrzeugs. Ferner hat sie eine fahrzeugseitige Steuereinrichtung zum Aussenden von Lokalisierungssignalen an den mobilen Identifikationsgeber zur Bestimmung der Position von diesem. Dabei ist die fahrzeugseitige Steuereinrichtung derart ausgelegt, die Häufigkeit des Aussendens der Lokalisierungssignale in Abhängigkeit der Position des mobilen Identifikationsgebers bezüglich des Fahrzeugs zu steuern.

Die Druckschrift DE102011013605A1 offenbart eine mobile Sendevorrichtung eines Zugangssystems eines Fahrzeugs, Die mobile Sendevorrichtung umfasst eine Erfassungsvorrichtung zum Erfassen eines Bewegungszustands der mobilen Sendevorrichtung und einen Sender zum Senden eines Zugangsfreigabesignals zur Freigabe eines Zugangs zu dem Fahrzeug. Die mobile Sendevorrichtung umfasst weiterhin eine Verarbeitungseinheit, welche den Sender in Abhängigkeit von dem erfassten Bewegungszustand ansteuert.

Somit besteht die Aufgabe der vorliegenden Erfindung darin, eine Möglichkeit zu schaffen, einen sicheren Betrieb einer Zugangsvorrichtung bei minimiertem Stromverbrauch zu gewährleisten.

Diese Aufgabe wird durch die Gegenstände der unabhängigen Ansprüche gelöst. Vorteilhafte Ausgestaltungen sind Gegenstand der Unteransprüche.

Dabei wird gemäß einem ersten Aspekt der Erfindung eine Zugangsvorrichtung für ein Fahrzeug mit folgenden Merkmalen geschaffen. Sie hat eine fahrzeugseitige Steuereinrichtung zum Aussenden von Anfragesignalen an einen mobilen Identifikationsgeber, um dessen Bewegungszustand zu bestimmen. Ferner ist die fahrzeugseitige Steuereinrichtung dafür eingerichtet, das Aussenden der Anfragesignale an eine Antwort des mobilen Identifikationsgebers mit dessen Bewegungszustand oder das Ausbleiben der Antwort anzupassen. Beispielsweise kann entsprechend des empfangenen Bewegungszustands die Häufigkeit des Aussendens der Anfragesignale zu angepasst werden. Insbesondere kann die Häufigkeit reduziert werden, wenn als Bewegungszustand des mobilen Identifikationsgebers ein ruhender Zustand empfangen worden ist. Es ist jedoch auch denkbar, zusätzlich oder alternativ zur Anpassung der Häufigkeit des Aussendens der Anfragesignale einen Dateninhalt oder eine Signaldauer der Anfragesignale anzupassen (insbesondere bei einem ruhenden Bewegungszustand des mobilen Identifikationsgebers den Dateninhalt oder die Signaldauer zu reduzieren).

Durch diese Steuerung des Aussendens der Anfragesignale in Abhängigkeit des empfangenen Bewegungszustands des mobilen Identifikationsgebers muss das Aussenden der Anfragesignale nicht mit einer konstanten und hohen Rate erfolgen, sondern kann situationsabhängig betrieben werden. Auf diese Weise kann der Stromverbrauch im Fahrzeug, aber auch im Identifikationsgeber verringert werden, ohne irgendwelche Verluste bei der Leistungsfähigkeit der Zugangsvorrichtung hinnehmen zu müssen.

Gemäß der Erfindung weist dabei die Zugangsvorrichtung ferner einen mobilen Identifikationsgeber auf, der eine identifikationsgeberseitige Sende-/Empfangseinrichtung zum Empfangen der fahrzeugseitigen Anfragesignale, und zum Aussenden eines Antwortsignals mit dem Bewegungszustand des mobilen Identifikationsgebers ansprechend auf zumindest ein Anfragesignal umfasst.

Gemäß der Erfindung hat der mobile Identifikationsgeber ferner eine identifikationsgeberseitige Steuereinrichtung zum Steuern des Aussendens der Antwortsignale (z.B. das Integrieren des Bewegungszustands in das Antwortsignal, etc.).

Gemäß einer Ausgestaltung der Erfindung kann die identifikationsgeberseitige Steuereinrichtung derart eingerichtet sein, das Aussenden des Antwortsignals nur bei Vorliegen eines bestimmten Bewegungszustands freizugeben. Insbesondere kann sie das Aussenden des Antwortsignals bei einem bewegten Zustand des mobilen Identifikationsgebers freigeben. Somit kann dann die fahrzeugseitige Steuereinrichtung, wie oben erwähnt, das Aussenden der Anfragesignale an das Ausbleiben der Antwort anpassen (beispielsweise durch Ändern der Häufigkeit beim Aussenden der Anfragesignale). Auf diese Weise kann der Stromverbrauch im mobilen Identifikationsgeber weiter gesenkt werden, da er nicht mehr auf jedes Anfragesignal antworten muss. Außerdem kann dadurch die Sicherheit der Zugangsvorrichtung erhöht werden, da in der Regel ein von einem Benutzer mitgeführter mobiler Identifikationsgeber dann bewegt wird, wenn der Benutzer zu seinem Fahrzeug geht und ab einer bestimmten Entfernung in die Reichweite der Anfragesignale des Fahrzeugs kommt. Sitzt der Benutzer beispielsweise in einem Restaurant, dann wird der mobile Identifikationsgeber ruhen bzw. einen ruhenden Bewegungszustand einnehmen, in dem er keine Antwortsignale aussendet. Eine fahrzeugseitige Steuereinrichtung, die keine Antwortsignale empfängt, wird entsprechend keine insbesondere sicherheitsrelevanten Fahrzeugfunktionen, wie das Entriegeln einer Fahrzeugtür, ausführen. Somit kann ein Mittelsmannangriff (relay-attack) verhindert werden.

Entsprechend dem oben dargestellten Fall eines Empfangs einer Antwort des mobilen Identifikationsgebers mit dessen Bewegungszustand oder bei Ausbleiben des Antwortsignals kann die fahrzeugseitige Steuereinrichtung die Häufigkeit des Aussendens der Anfragesignale anpassen. Insbesondere kann die Häufigkeit reduziert werden, wenn auf ein einziges oder eine bestimmte Anzahl von Anfragesignalen kein Antwortsignal vom mobilen Identifikationsgeber empfangen worden ist. Es ist jedoch auch denkbar, zusätzlich oder alternativ zur Anpassung der Häufigkeit des Aussendens der Anfragesignale einen Dateninhalt oder eine Signaldauer der Anfragesignale anzupassen (insbesondere bei Ausbleiben eines Antwortsignals des mobilen Identifikationsgebers den Dateninhalt oder die Signaldauer zu reduzieren). Auf diese Weise wird auf seitens des Fahrzeugs Energie gespart, und eine Erwärmung der fahrzeugseitigen Steuereinrichtung bzw. einer dieser zugeordneten fahrzeugseitigen Sendeeinrichtung verhindert.

Gemäß der Erfindung ist die fahrzeugseitige Steuereinrichtung dafür eingerichtet, dass sie zu einem beliebigen Zeitpunkt oder nach Ablauf eines bestimmten Zeitintervalls nach Erkennen eines bestimmten Bewegungszustands des mobilen Identifikationsgebers ein Anfragesignal mit einer Aufforderung an den mobilen Identifikationsgeber aussendet (oder ein Aussenden veranlasst), durch das der mobile Identifikationsgeber gezwungen wird, in jedem Fall ein Antwortsignal zurückzusenden. Insbesondere in einem ruhenden Zustand des mobilen Identifikationsgebers, in dem dieser kein Antwortsignal aussendet, um Strom zu sparen, kann eine derartige Aufforderung dazu dienen, dass die fahrzeugseitige Steuereinrichtung nachprüft, ob sich der mobile Identifikationsgeber noch in der Nähe des Fahrzeugs befindet, und gegebenenfalls um ferner dessen genaue Position mit Bezug auf das Fahrzeug zu ermitteln. Auf diese Weise kann die Sicherheit und Zuverlässigkeit der Zugangsvorrichtung erhöht werden.

Gemäß der Erfindung weist der mobile Identifikationsgeber ferner einen Bewegungssensor zum Erfassen einer Bewegung des mobilen Identifikationsgebers auf. Insbesondere kann der Bewegungssensor als ein Beschleunigungssensor ausgebildet sein, der dafür eingerichtet ist, eine Beschleunigung (und somit eine Bewegung) des mobilen Identifikationsgebers zu erfassen.

Gemäß einer weiteren Ausgestaltung der Erfindung kann die identifikationsgeberseitige Steuereinrichtung ferner mit dem Bewegungssensor verbunden sein. Insbesondere erkennt die identifikationsgeberseitige Steuereinrichtung dann als Bewegungszustand einen ruhenden Zustand des mobilen Identifikationsgebers, wenn die (vom Bewegungssensor) erfasste Bewegung oder (Beschleunigung) unterhalb eines vorbestimmten Schwellenwerts liegt. Ferner kann sie als Bewegungszustand einen bewegten Zustand des mobilen Identifikationsgebers erkennen, wenn die (vom Bewegungssensor) erfasste Bewegung bzw. Beschleunigung oberhalb eines vorbestimmten Schwellenwerts liegt.

Gemäß einer weiteren Ausgestaltung der Erfindung kann der mobile Identifikationsgeber ferner eine identifikationsgeberseitige Zeitmesseinrichtung zum Erfassen der Zeit seit einer letzten vorbestimmten Bewegung des mobilen Identifikationsgebers mit einem Bewegungswert oder Beschleunigungswert oberhalb eines vorbestimmten Schwellenwerts aufweisen.

Gemäß einer weiteren Ausgestaltung der Erfindung kann die identifikationsgeberseitige Steuereinrichtung ferner dafür eingerichtet sein, den Bewegungszustand des mobilen Identifikationsgebers als einen bewegten Zustand zu erkennen, wenn die vom Bewegungssensor erfasste Bewegung bzw. Beschleunigung oberhalb eines vorbestimmten Schwellenwerts liegt und die von der identifikationsgeberseitige Zeitmesseinrichtung gemessene Zeit innerhalb eines vorbestimmten Zeitintervalls liegt. Dabei kann das vorbestimmte Zeitintervall beispielsweise **10 bis 30** Sekunden zwischen der vorbestimmten Bewegung und Empfang des Anfragesignals betragen.

Gemäß einer weiteren Ausgestaltung der Erfindung kann die fahrzeugseitige Steuereinrichtung ferner dafür eingerichtet sein, die Häufigkeit des Aussendens der Anfragesignale wieder zu erhöhen, wenn nach Empfang einer Antwort mit einem ruhenden Zustand als Bewegungszustand des mobilen Identifikationsgebers wieder eine Antwort mit einem bewegten Zustand empfangen worden ist. Entsprechendes gilt, wenn nach Ausbleiben einer Antwort des mobilen Identifikationsgebers, nachdem eine bestimmte Anzahl von Anfragesignalen ausgesendet wurde, wieder eine Antwort empfangen wurde. Zusätzlich oder alternativ zur Erhöhung der Häufigkeit des Aussendens der Anfragesignale ist auch möglich, den Dateninhalt oder die Signaldauer wieder zu erhöhen, wenn die gerade beschriebenen Bedingungen erfüllt sind.

Gemäß einer weiteren Ausgestaltung der Erfindung kann der mobile Identifikationsgeber, wenn er von einem ruhenden in einen bewegten Zustand übergeht (oder anders ausgedrückt, wenn die identifikationsgeberseitige Steuereinrichtung zunächst einen ruhenden und dann einen bewegten Zustand erkannt hat) unmittelbar bzw. selbstständig ein Hinweissignal aussenden. Auf diese Weise kann die fahrzeugseitige Steuereinrichtung wieder schnell bzgl. des neuen Bewegungszustands (eine Bewegung) des mobilen Identifikationsgebers informiert werden und das Aussenden der Anfragesignale anpassen.

Gemäß einer weiteren Ausgestaltung der Erfindung kann die fahrzeugseitige Steuereinrichtung ferner für die Authentifizierung des mobilen Identifikationsgebers gegenüber dem Fahrzeug ausgelegt sein. Dazu dient sie zum Aussenden von zumindest einem Anfragesignal mit einer Anforderung für einen Identifikationscode an den mobilen Identifikationsgeber, sowie zum Empfangen des Identifikationscodes von dem Identifikationsgeber. Stimmt der vom mobilen Identifikationsgeber gesendete Identifikationscode mit einem im Fahrzeug bzw. in der fahrzeugseitigen Steuereinrichtung gespeicherten Sollcode überein, so wird der mobile Identifikationsgeber als korrekt identifiziert.

Gemäß einer weiteren Ausgestaltung der Erfindung kann die fahrzeugseitige Steuereinrichtung in Form der Anfragesignale oder als separate Lokalisierungssignale Signale zur Positionsbestimmung des mobilen Identifikationsgebers aussenden. Dabei ist es bei der Verwendung von separaten Lokalisierungssignalen denkbar, dass die Frequenz des Aussendens dieser Lokalisierungssignale auch entsprechend des Bewegungszustands des mobilen Identifikationsgebers angepasst wird, entsprechend der Frequenz der Anfragesignale. Es ist dabei denkbar, dass die oben beschriebene korrekte Identifizierung des mobilen Identifikationsgebers am Fahrzeug dafür verwendet wird, dass das Aussenden von Lokalisierungssignalen oder die Anpassung der Häufigkeit des Aussendens der Lokalisierungssignale nur dann geschieht, wenn zuvor ein korrekter mobiler Identifikationsgeber erfasst worden ist.

Gemäß einer weiteren Ausgestaltung der Erfindung ist es denkbar, dass die fahrzeugseitige Steuereinrichtung nur bei einem erkannten bewegten Zustand des mobilen Identifikationsgebers (oder anders ausgedrückt, wenn die erfasste Bewegung oder Beschleunigung oberhalb eines vorbestimmten Schwellenwerts liegt) Lokalisierungssignale für eine Positionsbestimmung ausgesendet. Hingegen kann im ruhenden Zustand des mobilen Identifikationsgebers (wenn die erfasste Bewegung bzw. Beschleunigung unterhalb eines vorbestimmten Schwellenwerts liegt) lediglich ein "Präsenz-Polling" (Polling: das regelmäßige Aussenden von Anfragesignalen) stattfinden, bei dem die Anwesenheit eines mobilen Identifikationsgebers und dessen Bewegungszustand abgefragt werden. Durch eine derart gewählte Abfragestrategie kann wiederum Strom insbesondere auf Seiten der fahrzeugseitigen Steuereinrichtung eingespart werden.

Gemäß einer weiteren Ausgestaltung der Erfindung ist die fahrzeugseitige Steuereinrichtung ferner dafür eingerichtet, eine vorbestimmte Fahrzeugfunktion auszulösen in Abhängigkeit des Empfangs eines bewegten Zustands des mobilen Identifikationsgebers oder der Position des mobilen Identifikationsgebers bezüglich des Fahrzeugs oder des Empfangs eines gültigen Identifikationscodes des mobilen Identifikationsgebers, oder bei Vorliegen einer bestimmten Kombination der genannten Kriterien. Bei derartigen Fahrzeugfunktionen kann es sich dabei um ein "welcome lighting" (eine Begrüßungsbeleuchtung) handeln, die ein Aktivieren einer Beleuchtungseinrichtung des Fahrzeugs bewirkt, wenn sich ein Benutzer mit dem mobilen Identifikationsgeber dem Fahrzeug genähert hat und sich in einer bestimmten Entfernung oder darunter bezüglich des Fahrzeugs befindet. Es kann sich ferner um eine sog. "approach-unlock"-Funktion (ein automatisches Entriegeln bei Annäherung) handeln, wobei eine dem mobilen Identifikationsgeber bzw. seinem mitführenden Benutzer die nächste Türe automatisch bei einer Annäherung entriegeln wird. Schließlich ist es auch denkbar, dass eine derartige Fahrzeugfunktion ein sog. "walk-away-locking" (ein Verriegeln beim Weggehen) umfasst, bei dem Fahrzeug bzw. dessen Türen automatisch verriegelt werden, wenn ein Benutzer mit seinem Identifikationsgeber sich weiter als einen vorbestimmten Abstand vom Fahrzeug wegbewegt.

Gemäß einer weiteren Ausgestaltung kann es sich bei dem mobilen Identifikationsgeber um einen elektronischen Fahrzeugschlüssel handeln. Es ist jedoch auch denkbar, dass der mobile Identifikationsgeber als ein Mobiltelefon, insbesondere als ein Smartphone (intelligentes Telefon) ausgebildet ist.

Gemäß einem zweiten Aspekt der Erfindung wird ein Fahrzeug geschaffen, das eine Zugangsvorrichtung gemäß obiger Darstellung oder einer Ausgestaltung hiervon umfasst.

Schließlich wird gemäß einem dritten Aspekt ein Verfahren zum Betreiben einer Zugangsvorrichtung für ein Fahrzeug mit folgenden Schritten geschaffen. Es werden Anfragesignale an einen mobilen Identifikationsgeber zur Bestimmung von dessen Bewegungszustand ausgesendet. Ferner wird das Aussenden der Anfragesignale an ein Antwortsignal des mobilen Identifikationsgebers mit dem Bewegungszustand des mobilen Identifikationsgebers, oder in Abhängigkeit des Empfangs oder Ausbleibens des Antwortsignals angepasst. Auf diese Weise wird eine Möglichkeit geschaffen, den Stromverbrauch einer Zugangsvorrichtung ohne Einbußen bei der sicheren Funktion zu reduzieren. Des Weiteren wird gemäß der Erfindung zu einem beliebigen Zeitpunkt oder nach Ablauf eines bestimmten Zeitintervalls nach Erkennen eines bestimmten Bewegungszustands des mobilen Identifikationsgebers ein Anfragesignal mit einer Aufforderung an den mobilen Identifikationsgeber ausgesendet, durch das der mobile Identifikationsgeber gezwungen wird, in jedem Fall ein Antwortsignal zurückzusenden.

Vorteilhafte Ausgestaltungen der Zugangsvorrichtung sind, soweit auf das Fahrzeug und das Verfahren übertragbar auch als vorteilhafte Ausgestaltungen des Fahrzeugs und des Verfahrens anzusehen, und umgekehrt.

Im Folgenden sollen nun beispielhafte Ausführungsformen der vorliegenden Erfindung Bezug nehmend auf die beiliegenden Zeichnungen näher erläutert werden.

Es zeigen:
Fig. 1 eine schematische Darstellung eines Fahrzeugs mit einer Zugangsvorrichtung gemäß einer Ausführungsform der Erfindung;
Fig. 2 ein Ablaufdiagramm zum Veranschaulichen der Steuerung des Aussendens von Anfragesignalen in Abhängigkeit der Bewegung des mobilen Identifikationsgebers gemäß einer ersten Ausführungsform;
Fig. 3 ein Ablaufdiagramm zum Veranschaulichen der Steuerung des Aussendens von Anfragesignalen in Abhängigkeit der Bewegung des mobilen Identifikationsgebers gemäß einer zweiten Ausführungsform;
Fig. 4 ein Ablaufdiagramm zum Veranschaulichen der Steuerung des Aussendens von Anfragesignalen in Abhängigkeit der Bewegung des mobilen Identifikationsgebers gemäß einer dritten Ausführungsform.
Fig. 5 ein Ablaufdiagramm zum Veranschaulichen der Steuerung des Aussendens von Anfragesignalen in Abhängigkeit der Bewegung des mobilen Identifikationsgebers gemäß einer vierten Ausführungsform.

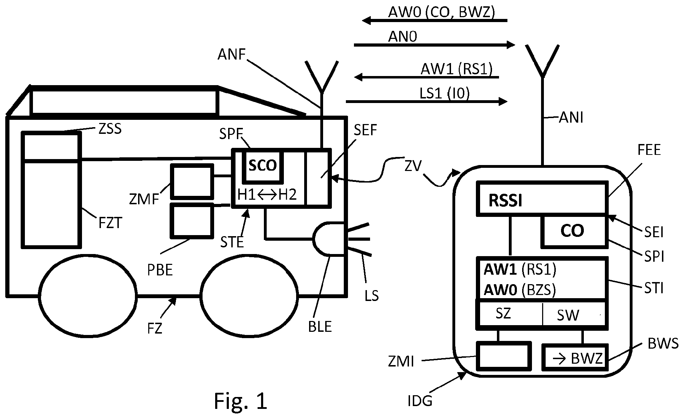

Es sei zunächst auf Figur 1 verwiesen, in der ein Fahrzeug FZ mit einer Zugangsvorrichtung ZV gemäß einer Ausführungsform der Erfindung gezeigt ist. Das Fahrzeug FZ weist dabei eine Fahrzeugtür FZT auf, die über ein zentrales Schließsystem ZSS entriegelbar oder verriegelbar ist. Des Weiteren umfasst das Fahrzeug FZ fahrzeugseitige Komponenten der Zugangsvorrichtung ZV. Zum einen ist dies eine fahrzeugseitige Steuereinrichtung STE. Diese hat eine fahrzeugseitige Sende-/Empfangseinrichtung SEF, die dafür eingerichtet ist, Funksignale an einen mobilen Identifikationsgeber IDG zu senden und Antwortsignale von diesem zu empfangen. Der mobile Identifikationsgeber kann dabei als ein elektronischer Fahrzeugschlüssel oder ein Smartphone ausgebildet sein. Für das Senden und Empfangen ist die fahrzeugseitige Steuereinrichtung STE bzw. deren fahrzeugseitige Sende-/Empfangseinrichtung SEF mit einer fahrzeugseitigen Antenne ANF verbunden, die auch mehrere Teilantennen aufweisen kann. Dabei kann die fahrzeugseitige Sende-/Empfangseinrichtung SEF über die Antenne ANF beispielsweise ein niederfrequentes Anfragesignal ANO (z.B. bei ca. 125 kHz) zum Identifikationsgeber IDG aussenden, der ansprechend auf dieses mit einem Antwortsignale AWO antwortet, in dem ferner ein Identifikationscode CO des Identifikationsgebers IDG enthalten sein kann. Bei dem Antwortsignal AWO kann es sich dabei um ein Hochfrequenzsignal (z.B. bei ca. 433 MHz) handeln.

Es ist ferner denkbar, dass die Kommunikation bzw. der Austausch der beschriebenen Signale auch mittels eines anderen Funkstandards erfolgen kann, wie beispielsweise gemäß einem Bluetooth-Standard, insbesondere "Bluetooth Low Energy" (BLE), oder auch gemäß einem WLAN-Standard (Wireless Local Area Network). Auch eine Kommunikation mittels eines Austauschs von UWB-(ultra wideband = Ultra-Breitband) Signalen ist denkbar.

Neben den gerade erwähnten Signalen für einen Authentifizierungsvorgang können zwischen dem Fahrzeug FZ und dem Identifikationsgeber IDG weitere Signale für eine Bestimmung der Position des Identifikationsgebers IDG bezüglich des Fahrzeugs FZ ausgetauscht werden. Dabei kann die Steuereinrichtung STE über die Antenne ANF ein oder mehrere niederfrequente Lokalisierungssignale LS1 aussenden, deren Feldstärke am Ort des Identifikationsgebers gemessen und in Form eines Feldstärkewerts RS1 mit einem entsprechenden Antwortsignal AW1 vom Identifikationsgeber zum Fahrzeug zurückgeschickt wird. Ausgehend von der Tatsache, dass die empfangene Feldstärke eines Lokalisierungssignals mit zunehmenden Abstand abnimmt, kann der mit dem Antwortsignal AW1 mitgeschickte Feldstärkewert RS1 ein Maß für die Entfernung zwischen Identifikationsgeber IDG und dem Fahrzeug darstellen.

Während die Kommunikation einer einzigen Antenne ANF mit dem Identifikationsgeber IDG die Bestimmung eines Abstands des Identifikationsgebers IDG von dieser Antenne ermöglicht, ist es ferner denkbar, eine genauere Positionsbestimmung des Identifikationsgebers IDG bezüglich des Fahrzeugs FZ dadurch zu ermöglichen, dass zusätzlich zur Antenne ANF eine weitere fahrzeugseitige Antenne zum Aussenden von Lokalisierungssignalen verwendet wird. Mittels eines entsprechenden Triangulationsverfahrens kann dann der Identifikationsgeber genauer geortet werden. Eine oder auch mehrere zusätzliche Antennen für eine verbesserte Positionsbestimmung sind zwar denkbar, aber aus Gründen der Übersichtlichkeit in Figur 1 nicht dargestellt.

Es sei bemerkt, dass bei der obigen Darstellung für Positionsbestimmung zwischen fahrzeugseitigen Antennen und dem mobilen Identifikationsgeber eine Empfangsfeldstärkemessung auf Seiten des mobilen Identifikationsgebers von niederfrequenten (oder hochfrequenten bzw. auch Bluetooth) Lokalisierungssignalen, abgestrahlt von den fahrzeugseitigen Antennen, durchgeführt worden ist. Es ist jedoch auch denkbar, eine Positionsbestimmung zwischen fahrzeugseitigen Antennen und dem mobilen Identifikationsgeber basierend auf Laufzeitmessungen, wie z.B. mittels funkbasierter UWB- (ultra wideband = Ultra-Breitband) Übertragungen durchzuführen. Dazu weist die fahrzeugseitige Steuereinrichtung STE bzw. deren Sende-/Empfangseinrichtung SEF anstelle der oben erwähnten Antennen zum Aussenden von niederfrequenten (oder hochfrequenten bzw. Bluetooth) Lokalisierungssignalen eine oder mehrere entsprechende UWB-Sende-/Empfangseinrichtungen auf, denen jeweilige UWB-Antennen zugeordnet sind. Für eine Positionsbestimmung mit Bezug auf die Antennen, die je nach Anwendungsfall an verschiedenen Positionen am Fahrzeug FZ vorgesehen sind, senden die jeweiligen Antennen UWB-Signale (kurze UWB-Impulse) zu dem mobilen Identifikationsgeber IDG aus, die von dem mobilen Identifikationsgeber IDG empfangen und wieder zurück zu den UWB-Antennen bzw. deren zugeordneten UWB-Sende-/Empfangseinrichtungen gesendet werden.

Die für das Überwinden der Entfernung zwischen Fahrzeug bzw. den UWB-Antennen zu dem mobilen Identifikationsgeber benötigte Laufzeit wird somit in den jeweiligen UWB-Sende-/Empfangseinrichtungen gemessen, sodass darauf basierend die jeweilige Entfernung bzw. die relative Position des mobilen Identifikationsgebers IDG zu den (oder der) UWB-Antennen ermittelt werden kann. Auch ein Authentifizierungsvorgang kann zusätzlich zur Positionsbestimmung mittels UWB durchgeführt werden

Die fahrzeugseitige Steuereinrichtung STE ist ferner mit dem zentralen Schließsystem ZSS verbunden, so dass die Steuereinrichtung STE über das zentrale Schließsystem ZSS die Fahrzeugtür FZT entriegeln bzw. verriegeln kann. Eine Voraussetzung für ein Entriegeln besteht darin, dass der von dem Identifikationsgeber IDG an das Fahrzeug übertragene Identifikationscode CO mit einem in der fahrzeugseitigen Steuereinrichtung STE (bzw. einer dieser zugeordneten Speichereinrichtung SPF) gespeicherten Sollcode SCO übereinstimmt. In diesem Fall wird der Identifikationsgeber IDG als der korrekte Identifikationsgeber angesehen, so dass ein diesen Identifikationsgeber mitführender Benutzer mit dem korrekten Identifikationsgeber ins Fahrzeuginnere bzw. in die Fahrgastzelle gelangen kann. Eine weitere (zusätzliche) Voraussetzung für ein Entriegeln der Fahrzeugtür FZT kann sein, dass sich der Identifikationsgeber IDG ferner an der richtigen Position bezüglich des Fahrzeugs bzw. innerhalb eines bestimmten Abstands um das Fahrzeug befindet. Anders ausgedrückt, ist es denkbar, dass eine Fahrzeugtür FZT von der Steuereinrichtung STE beispielsweise nur dann entriegelt werden kann, wenn sich der Identifikationsgeber IDG innerhalb eines vorbestimmten Abstands um das Fahrzeugs oder innerhalb eines vorbestimmten Abstands bezüglich einer Fahrzeugtüre befindet. Als weitere
zusätzliche) Voraussetzung für ein Entriegeln der Fahrzeugtür FZT kann sein, dass sich der mobile Identifikationsgeber IDG in einem bewegten Zustand befindet.

Es ist ferner denkbar, dass ein automatisches Entriegeln der Fahrzeugtür FZT auch nur dann erfolgt, wenn einerseits der Identifikationscode CO als korrekt registriert wurde und ferner die Bewegungsrichtung in Richtung des Fahrzeugs FZ verläuft. Das Kriterium eines bewegten Zustands des mobilen Identifikationsgebers wäre bei Erfassen einer Bewegungsrichtung schon implizit mit als erkannt anzusehen.

Zur Positionsbestimmung ist die fahrzeugseitige Steuereinrichtung STE mit einer fahrzeugseitigen Positionsbestimmungseinrichtung PBE verbunden, die von der fahrzeugseitigen Steuereinrichtung STE die über eine oder mehrere Fahrzeugantennen ANF empfangenen Feldstärkewerte RS1 eines Identifikationsgebers IDG erhält und daraus durch Kenntnis des Anbringungsorts der einen oder mehreren Antennen am Fahrzeug auf die Position des mobilen Identifikationsgebers IDG schließen kann.

Zur Kommunikation des mobilen Identifikationsgebers IDG mit dem Fahrzeug FZ hat der mobile Identifikationsgeber IDG eine identifikationsgeberseitige Sende-/Empfangseinrichtung SEI mit einer Feldstärkeerfassungseinrichtung FEE, die über eine identifikationsgeberseitige Antenne ANI die entsprechenden Lokalisierungssignale LS1 (sowie auch Anfragesignale ANO) empfängt, wobei die Feldstärkeerfassungseinrichtung FEE von den Lokalisierungssignalen LS1 den jeweiligen Feldstärkewert RSSI bestimmt und diesen der identifikationsgeberseitigen Steuereinrichtung STI weiterleitet. Diese generiert daraus ein Antwortsignal AW1, in dem ein der erfassten Feldstärke entsprechender Wert oder ein daraus abgeleiteter Wert RS1 enthalten ist. Wie oben erwähnt, wird dieses Antwortsignal AW1 dann, beispielsweise als ein Hochfrequenzsignal über die identifikationsgeberseitige Antenne ANI zurück zum Fahrzeug geschickt.

Wie oben ferner erwähnt, erhält der Identifikationsgeber IDG für eine Authentifizierung gegenüber dem Fahrzeug ein Anfragesignal ANO, auf das hin die identifikationsgeberseitige Steuereinrichtung STI aus einem Speicher SPI den Identifikationscode CO herausholt und in dem Antwortsignal AWO, wiederum insbesondere als ein Hochfrequenzsignal zum Fahrzeug FZ zurückschickt.

Durch das Aussenden der Anfragesignale ANO kann die fahrzeugseitige Steuereinrichtung STE ferner den Bewegungszustand des mobilen Identifikationsgebers abfragen. Dies kann dabei durch ein regelmäßiges Aussenden der Anfragesignale ANO mit einer ersten vorbestimmten Rate oder Häufigkeit H1 geschehen. Dazu kann in den Anfragesignalen ANO eine entsprechende Aufforderung enthalten sein. Wie es unten noch genauer erläutert werden wird, kann die fahrzeugseitige Steuereinrichtung STE ferner dafür eingerichtet sein, das Aussenden der Anfragesignale an eine Antwort des mobilen Identifikationsgebers mit dessen Bewegungszustand anzupassen. Entsprechend ist es auch möglich, das Aussenden der Anfragesignale an das Ausbleiben der Antwort des mobilen Identifikationsgebers anzupassen.

Gemäß einer ersten Variante ist die identifikationsgeberseitige Steuereinrichtung STI zum Steuern des Aussendens der Antwortsignale, wie zum Integrieren des Bewegungszustands BWZ in das Antwortsignal AN0 ausgelegt. Dazu ist die identifikationsgeberseitige Steuereinrichtung STI mit einem identifikationsgeberseitigen Bewegungssensor BWS zum Erfassen einer Bewegung bzw. Bewegungszustands BWZ des mobilen Identifikationsgebers verbunden. Die identifikationsgeberseitige Steuereinrichtung erkennt dabei als Bewegungszustand BWZ einen ruhenden Zustand des mobilen Identifikationsgebers IDG, wenn die erfasste Bewegung unterhalb eines vorbestimmten Schwellenwerts SW liegt, und als Bewegungszustand BWZ einen bewegten Zustand des mobilen Identifikationsgebers, wenn die erfasste Bewegung oberhalb des vorbestimmten Schwellenwerts SW liegt.

Wird von dem mobilen Identifikationsgeber IDG ein Antwortsignal AW0 mit einem Bewegungszustand BWZ insbesondere ansprechend auf ein Anfragesignal zurückgeschickt, so prüft die fahrzeugseitige Steuereinrichtung STE, um welchen zurück gemeldeten Bewegungszustand es sich handelt. Im Falle eines "bewegten Zustands" des Identifikationsgeber IDG wird die Häufigkeit des Aussendens der Anfragesignale AN0 beibehalten. Wird hingegen ein "ruhender Zustand" als Bewegungszustand BZW des mobilen Identifikationsgebers empfangen, so wird die fahrzeugseitige Steuereinrichtung STE die Häufigkeit des Aussendens der Anfragesignale AN0 auf eine zur ersten Häufigkeit verminderte zweite Häufigkeit H2 reduzieren. Bei einem ruhenden Zustand des Identifikationsgebers ist nicht zu erwarten, dass dieser umgehend von einem Benutzer zum Fahrzeug getragen wird (um eine Authentifizierung durchzuführen bzw. abzuschließen oder damit der Benutzer das Fahrzeug betritt). Folglich wird durch das Reduzieren der Häufigkeit des Aussendens der Anfragesignale AN0 einerseits am Fahrzeug Strom gespart, und andererseits auch am mobilen Identifikationsgeber, da dieser nicht mehr so oft antworten muss.

Zusätzlich zu den Funktionen der ersten Variante hat die identifikationsgeberseitige Steuereinrichtung STI gemäß einer zweiten Variante weitere Funktionen bei der Steuerung des Aussendens der Antwortsignale. Neben der Integration des Bewegungszustands BWZ in das Antwortsignal ist die identifikationsgeberseitige Steuereinrichtung STI dafür ausgelegt, das Aussenden eines Antwortsignals AW0 nur bei Vorliegen eines bestimmten Bewegungszustands BWZ freizugeben. Insbesondere kann sie das Aussenden des Antwortsignals bei einem bewegten Zustand des mobilen Identifikationsgebers freigeben. Auf diese Weise kann der Stromverbrauch im mobilen Identifikationsgeber weiter gesenkt werden, da er nicht mehr auf jedes Anfragesignal antworten muss.

Gemäß einer dritten Variante kann der mobile Identifikationsgeber IDG ferner eine identifikationsgeberseitige Zeitmesseinrichtung ZMI zum Erfassen der Zeit seit einer letzten vorbestimmten Bewegung des mobilen Identifikationsgebers IDG mit einem Bewegungswert oder Beschleunigungswert oberhalb eines vorbestimmten Schwellenwerts SZ aufweisen. Entsprechend kann die identifikationsgeberseitige Steuereinrichtung ferner dafür eingerichtet sein, den Bewegungszustand BWZ des mobilen Identifikationsgebers IDG als einen bewegten Zustand zu erkennen, wenn die vom Bewegungssensor BMS erfasste Bewegung bzw. Beschleunigung oberhalb des vorbestimmten Schwellenwerts liegt und die von der identifikationsgeberseitige Zeitmesseinrichtung gemessene Zeit innerhalb eines vorbestimmten Zeitintervalls liegt.

Nach Darstellung der wesentlichen Komponenten einer Zugangsvorrichtung (auch mit möglichen Varianten) sollen nun im Folgenden Ausführungsformen zur Ansteuerung des Aussendens von Anfragesignalen in Abhängigkeit der Bewegung des mobilen Identifikationsgebers IDG dargestellt werden.

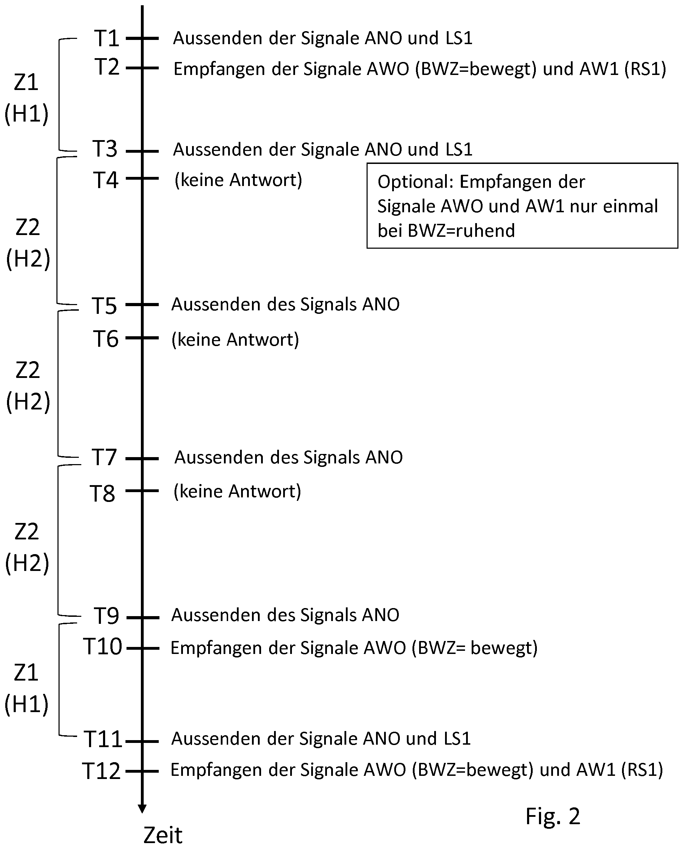

In Figur 2 ist dabei ein erstes Ablaufdiagramm zum Veranschaulichen der Ansteuerung des Aussendens von Anfrage- bzw. Lokalisierungssignalen gemäß einer ersten Ausführungsform gezeigt. Hierin verläuft ein Zeitstrahl in der Figur von oben nach unten, wobei die entsprechenden Ereignisse aus Sicht der fahrzeugseitigen Steuereinrichtung STE (bzw. deren fahrzeugseitiger Sende-/Empfangseinrichtung SEF) dargestellt sind. Beginnend von oben nach unten wird in einem ersten Schritt zu einem Zeitpunkt T1 von der fahrzeugseitigen Sende-/Empfangseinrichtung SEF ein jeweiliges Anfragesignal ANO sowie ein Lokalisierungssignal LS1 ausgesendet. Diese Signale werden in einem zweiten Schritt von dem mobilen Identifikationsgeber IDG, der sich gerade in Bewegung befindet, empfangen und ausgewertet. Entsprechend schickt der mobile Identifikationsgeber IDG jeweilige Antwortsignale AWO mit der Information eines bewegten Zustands des mobilen Identifikationsgebers sowie ein Antwortsignal AW1 auf das Lokalisierungssignal mit einer Information der am Ort des mobilen Identifikationsgebers gemessenen Feldstärke RS1 zurück. Diese Signale werden dann in einem dritten Schritt zum Zeitpunkt T2 von der fahrzeugseitigen Sende-/Empfangseinrichtung SEF empfangen.

Während des bewegten Zustands eines mobilen Identifikationsgebers IDG und solange die fahrzeugseitige Sende-/Empfangseinrichtung SEF seitens des mobilen Identifikationsgebers IDG Antwortsignale AW0 und AW1 auf entsprechende Anfrage- ANO bzw. Lokalisierungssignale LS1 empfängt, wird von der fahrzeugseitigen Steuereinrichtung STE ein Zeitintervall Z1 für das nächste Aussenden eines weiteren Anfragesignals bzw. Lokalisierungssignals eingestellt. Dieses Zeitintervall Z1 beispielsweise von ca. 250 Millisekunden entspricht einer ersten Rate bzw. Häufigkeit A1 (Signale pro Sekunde). Das Zeitintervall Z1 so weitere Zeitintervalle (beispielsweise das Zeitintervall Z2) kann mit einer fahrzeugseitigen Zeitmesseinrichtung ZMF gemessen werden.

Somit wird nach Ablauf des Zeitintervalls Z1 ausgehend von dem Zeitpunkt T1 in einem vierten Schritt zum Zeitpunkt T3 wiederum ein jeweiliges Anfragesignal ANO und ein Lokalisierungssignal LS1 ausgesendet. Diese Signale werden in einem fünften Schritt vom mobilen Identifikationsgeber IDG, der sich nun in Ruhe befindet, empfangen und verarbeitet. Gemäß dieser ersten Ausführungsform ist die identifikationsgeberseitige Steuereinrichtung STE derart ausgebildet, dass sie bei einem ruhenden Zustand des Identifikationsgebers IDG der identifikationsgeberseitigen Sende-/Empfangseinrichtung SEI nicht freigibt, ein jeweiliges Antwortsignal AW0 oder AW1 auszusenden. Somit wartet die fahrzeugseitige Sende-/Empfangseinrichtung SEF in einem sechsten Schritt zum Zeitpunkt T4 auf Antwortsignale, es werden jedoch keine Antwortsignale auf Seiten des Fahrzeugs empfangen. Durch das Unterbinden des Aussendens von Antwortsignalen im ruhenden Zustand des Identifikationsgebers IDG kann somit auf Seiten des Identifikationsgebers Strom gespart werden.

Aufgrund der Tatsache, dass die fahrzeugseitige Sende-/Empfangseinrichtung SEF zum Zeitpunkt T4 kein Antwortsignal erhalten hat, wird die fahrzeugseitige Steuereinrichtung STE nun das Zeitintervall für das nächste Aussenden eines Anfragesignals auf das Zeitintervall Z2, das länger ist als das Zeitintervall Z1, einstellen. Es kann beispielsweise 1 bis 2 Sekunden betragen. Entsprechend ändert sich somit die Häufigkeit H2 des Aussendens von Signalen seitens der fahrzeugseitigen Sende-/Empfangseinrichtung SEF auf einen geringeren Wert.

Somit wird nun in einem siebten Schritt zu einem Zeitpunkt T5 seitens der fahrzeugseitigen Sende-/Empfangseinrichtung SEF ein nächstes Anfragesignal ANO ausgesendet. Gemäß dieser Ausführungsform wird ferner im ruhenden Zustand des mobilen Identifikationsgebers darauf verzichtet, ein Lokalisierungssignal LS1 auszusenden, da sich der mobile Identifikationsgeber IDG im Ruhezustand nicht bewegt und seinen Ort seit der letzten Positionsbestimmung nicht geändert hat. Auf diese Weise wird nicht nur durch die verringerte Häufigkeit (H2) des Aussendens von Anfragesignalen, sondern auch durch den Verzicht des Aussendens von Lokalisierungssignalen (und somit durch das Verkürzen der Sendedauer) auch auf Fahrzeugseitige Strom eingespart. Da sich der mobile Identifikationsgeber IDG weiterhin in Ruhe befindet und dies die identifikationsgeberseitige Steuereinrichtung STI in einem achten Schritt auch feststellt, wird der Identifikationsgeber IDG kein Antwortsignal aussenden. In einem neunten Schritt zu einem Zeitpunkt T6 wartet die fahrzeugseitige Sende-/Empfangseinrichtung SEF auf ein Antwortsignal, es wird jedoch kein Antwortsignal auf Seiten des Fahrzeugs empfangen.

Da sich im Beispiel der mobile Identifikationsgeber IDG weiter in Ruhe befindet, werden zu den Zeitpunkten T7 und T8 quasi die gerade erwähnten Schritte sieben bis neun wiederholt.

In einem zehnten Schritt zum Zeitpunkt T9 nach Ablauf eines weiteren zweiten Zeitintervalls Z2 nach Aussenden des letzten Anfragesignals ANO wird wiederum ein Anfragesignal ANO seitens der fahrzeugseitigen Sende-/Empfangseinrichtung SEF ausgesendet. Dieses Anfragesignal wird in einem elften Schritt vom mobilen Identifikationsgeber IDG, der sich nun wieder in einem bewegten Zustand befindet, empfangen. Entsprechend wird die identifikationsgeberseitige Steuereinrichtung STI in das entsprechende Antwortsignal AW0 eine Information BWZ zum bewegten Zustand des Identifikationsgebers einbauen und das Aussenden dieser Antwort AW0 veranlassen. Folglich empfängt die fahrzeugseitige Sende-/Empfangseinrichtung SEF in einem zwölften Schritt zum Zeitpunkt T10 das Antwortsignal AW0 mit der Information des bewegten Zustands des mobilen Identifikationsgebers.

Die fahrzeugseitige Steuereinrichtung STE erhöht in einem dreizehnten Schritt daraufhin wieder die Häufigkeit des Aussendens der Anfragesignale auf den Wert H1, sodass ausgehend von dem Zeitpunkt T9 nach einem Zeitintervall Z1 in einem vierzehnten Schritt zum Zeitpunkt T11 einerseits wieder ein Anfragesignal ANO und nun wieder (aufgrund der Bewegung des mobilen Identifikationsgebers) ein Lokalisierungssignal LS1 ausgesendet wird. Wie oben bei den Signalen zum Zeitpunkt T1 werden auch hier wieder die beiden Signale vom mobilen Identifikationsgeber IDG in einem fünfzehnten Schritt empfangen, ausgewertet und es wird ein entsprechendes Antwortsignal AWO und AW1 zurückgesendet. Die Antwortsignale werden in einem sechzehnten Schritt zu einem Zeitpunkt T12 von der fahrzeugseitigen Sende-/Empfangseinrichtung SEF empfangen und ausgewertet. Durch dieses Ansteuern des Aussendens der Anfragesignale bzw. Lokalisierungssignale in Abhängigkeit der Bewegung des mobilen Identifikationsgebers IDG kann die Häufigkeit entsprechend der Bewegung optimal angepasst werden und somit Strom eingespart werden, sowohl auf Seiten des Fahrzeugs FZ als auch auf Seiten des mobilen Identifikationsgebers IDG.

Es sei bemerkt, dass es möglich ist, den Zeitpunkt T11 zum erneuten Aussenden von Anfrage- bzw. Lokalisierungssignalen nicht erst nach einem Zeitintervall Z1 ab dem Zeitpunkt T9 des letzten Aussendens eines Anfragesignals ANO zu definieren, wie es in Figur 2 gezeigt wurde, sondern gleich direkt nach Empfang und Auswertung des Antwortsignals AW0 zum Zeitpunkt T10. Auf diese Weise kann wieder eine schnell beginnende Lokalisierung des mobilen Identifikationsgebers IDG und somit eine verbesserte Zuverlässigkeit der Zugangsvorrichtung erreicht werden.

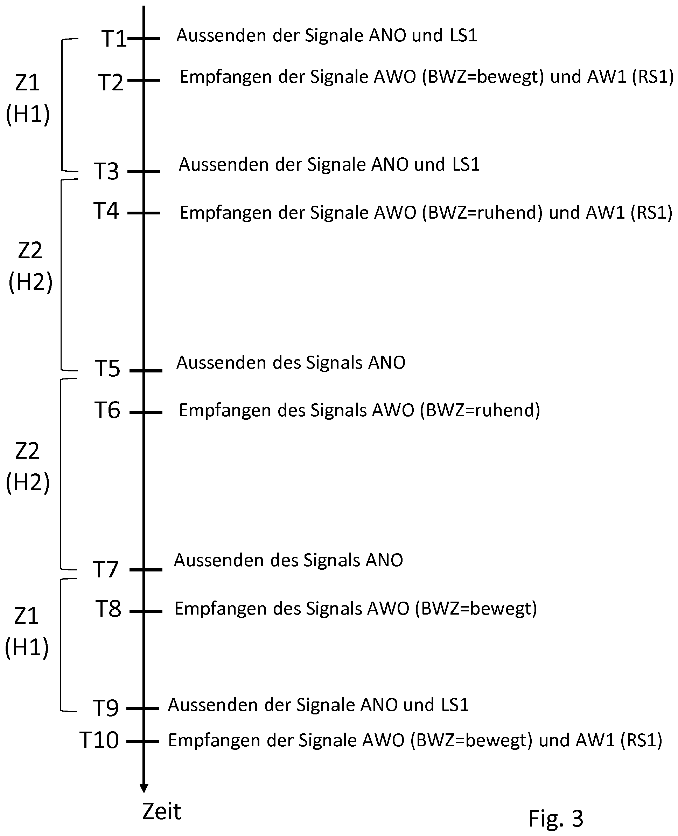

Es sei nun auf Figur 3 verwiesen, in der ein weiteres Ablaufdiagramm zum Veranschaulichen der Ansteuerung des Aussendens von Anfrage- bzw. Lokalisierungssignalen gemäß einer zweiten Ausführungsform gezeigt ist. Die ersten beiden Ausführungsformen sind sich ähnlich und unterscheiden sich im Wesentlichen in den Schritten fünf und sechs bzw. acht und neun. Anders ausgedrückt ist die identifikationsgeberseitige Steuereinrichtung STI in dieser zweiten Ausführungsform derart ausgebildet, dass sie bei Feststellen eines ruhenden Zustands des Identifikationsgebers nicht das Aussenden der Antwortsignale AW0 bzw. AW1 verhindert, sondern nun immer freigibt. Hierfür integriert sie in das jeweilige Antwortsignal einen Bewegungszustand oder auch nach Bedarf einen gemessenen Feldstärkewert, wie oben erläutert.

Das bedeutet, in einem geänderten Schritt fünf nach der zweiten Ausführungsform sendet der mobile Identifikationsgeber sowohl ein Antwortsignal AW0 mit einer Information BWZ bzgl. eines ruhenden mobilen Identifikationsgebers IDG, als auch ein Antwortsignal AW1 mit dem gemessenen Feldstärkewert RS1. Entsprechend empfängt die fahrzeugseitige Sende-/Empfangseinrichtung SEF die Antwortsignale in einem geänderten Schritt sechs zum Zeitpunkt T4. Die fahrzeugseitige Steuereinrichtung STE kennt nun eindeutig den ruhenden Zustand des mobilen Identifikationsgebers IDG, passt die Häufigkeit des Aussendens von Signalen an, und wird entsprechend auch davon absehen, Lokalisierungssignale LS1 während eines ruhenden Zustands des mobilen Identifikationsgebers IDG auszusenden.

Entsprechend wird der mobile Identifikationsgeber in einem geänderten Schritt acht eine Information BWZ bzgl. eines ruhenden Zustands des mobilen Identifikationsgebers IDG in ein Antwortsignal AW0 integrieren und an das Fahrzeug FZ zurücksenden. Dort empfängt die fahrzeugseitige Sende-/Empfangseinrichtung SEF das Antwortsignal in einem geänderten Schritt neun zum Zeitpunkt T6.

Auch in dieser Ausführungsform kann durch das entsprechende Ansteuern des Aussendens der Anfragesignale bzw. Lokalisierungssignale in Abhängigkeit der Bewegung des mobilen Identifikationsgebers IDG die Häufigkeit entsprechend der Bewegung optimal angepasst werden und somit Strom eingespart werden.

Es auch zu Figur 3 sei bemerkt, dass es möglich ist, den Zeitpunkt T9 zum erneuten Aussenden von Anfrage- bzw. Lokalisierungssignalen nicht erst nach einem Zeitintervall Z1 ab dem Zeitpunkt T7 des letzten Aussendens eines Anfragesignals ANO zu definieren, wie es in Figur 3 gezeigt wurde, sondern gleich direkt nach Empfang und Auswertung des Antwortsignals AW0 zum Zeitpunkt T8. Auf diese Weise kann wieder eine schnell beginnende Lokalisierung des mobilen Identifikationsgebers IDG erreicht werden.

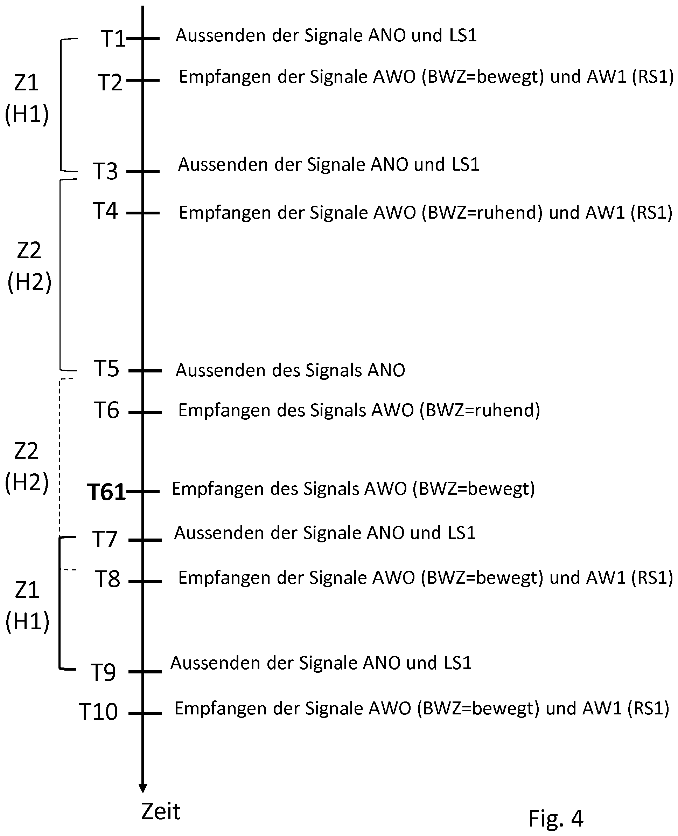

Es sei nun auf Figur 4 verwiesen, in der ein weiteres Ablaufdiagramm zum Veranschaulichen der Ansteuerung des Aussendens von Anfrage- bzw. Lokalisierungssignalen gemäß einer dritten Ausführungsform gezeigt ist. Im Wesentlichen sind die Schritte in dieser dritten Ausführungsform gleich denen der zweiten Ausführungsform. Besonders ist hier ein neuer Schritt zum Zeitpunkt T61. Diesbezüglich ist die identifikationsgeberseitige Steuereinrichtung STI dafür eingerichtet, dass sie bei einer bestimmten erkannten Bewegung des mobilen Identifikationsgebers IDG bzw. bei Erkennen eines bewegten Zustands des mobilen Identifikationsgebers IDG nachdem zuvor ein ruhender Zustand des mobilen Identifikationsgebers IDG erkannt wurde, selbstständig ein Signal (entsprechend einem Antwortsignal AW0, jedoch ohne einen Trigger durch ein empfangenes Anfragesignal) aussendet, in dem die vorbestimmte Bewegung bzw. der bewegte Zustand des mobilen Identifikationsgebers IDG angezeigt wird. Zum Zeitpunkt T61 empfängt die fahrzeugseitige Sende-/Empfangseinrichtung SEF das Signal AWO mit der Mitteilung. Die fahrzeugseitige Steuereinrichtung STE wird umgehend den neuen Bewegungszustand des mobilen Identifikationsgebers analysieren und noch vor Ablauf des zweiten Zeitintervalls Z2 (deshalb die gestrichelte Darstellung der entsprechenden Klammer) das Aussenden eines Anfragesignals ANO und eines Lokalisierungssignals LS1 veranlassen. Auf diese Weise kann schnell der Modus des Aussendens der Anfrage- bzw. Lokalisierungssignale an die Bewegung des mobilen Identifikationsgebers angepasst werden, und eine präzise Positionsbestimmung bei optimiertem Stromverbrauch realisiert werden.

Es bemerkt, dass die gerade beschriebene Funktionsweise der identifikationsgeberseitigen Steuereinrichtung STI nicht nur als eine Option der zweiten Ausführungsform, sondern auch als Option der ersten Ausführungsform gesehen werden kann. Das bedeutet, obwohl die identifikationsgeberseitige Steuereinrichtung STI im ruhenden Zustand des mobilen Identifikationsgebers IDG das Aussenden von Antwortsignalen verhindert, kann sie bei einem Übergang in den bewegten Zustand selbstständig das Aussenden eines Signals mit der Änderung des Bewegungszustands veranlassen.

Es sei bemerkt, dass es auch denkbar ist, eine Kombination der ersten und der zweiten Ausführungsform zu realisieren, insbesondere dahingehend, dass die identifikationsgeberseitigen Steuereinrichtung STI auf ein erstes Anfragesignal ANO nach Erkennen eines ruhenden Zustands noch einmal ein entsprechendes Antwortsignal mit dem Bewegungszustand des mobilen Identifikationsgeber IDG (und gegebenenfalls ein Antwortsignal AW1) aussendet, um die fahrzeugseitige Steuereinrichtung STE über den ruhenden Zustand des mobilen Identifikationsgebers IDG zu informieren, und dann im Folgenden während des ruhenden Zustands des mobilen Identifikationsgebers IDG das Aussenden von Antwortsignalen unterbindet. Mit Bezug auf Figur 2 ist es somit als Option möglich, dass die zum Zeitpunkt T3 an den nun ruhenden mobilen Identifikationsgeber IDG ausgesendeten Signale von diesem empfangen und ausgewertet werden. Nur beim ersten Anfragesignal ANO seit des erkannten ruhenden Zustands schickt der mobile Identifikationsgeber IDG jeweilige Antwortsignale AWO mit der Information eines ruhenden Zustands des mobilen Identifikationsgebers sowie ein Antwortsignal AW1 auf das Lokalisierungssignal mit einer Information der am Ort des mobilen Identifikationsgebers gemessenen Feldstärke RS1 zurück. Diese Signale werden dann zum Zeitpunkt T4 von der fahrzeugseitigen Sende-/Empfangseinrichtung SEF empfangen und ausgewertet. Auf diese Weise weiß nun die fahrzeugseitige Steuereinrichtung STE, dass sich der mobile Identifikationsgeber in Ruhe befindet und dass das folgende Ausbleiben einer Antwort aufgrund des ruhenden Zustands erfolgt. Somit ist eine Unterscheidung zwischen einem "ruhenden" Zustand und einem Zustand "Kommunikation gestört" möglich, wodurch die Sicherheit und Zuverlässigkeit der Zugangsvorrichtung erhöht wird.

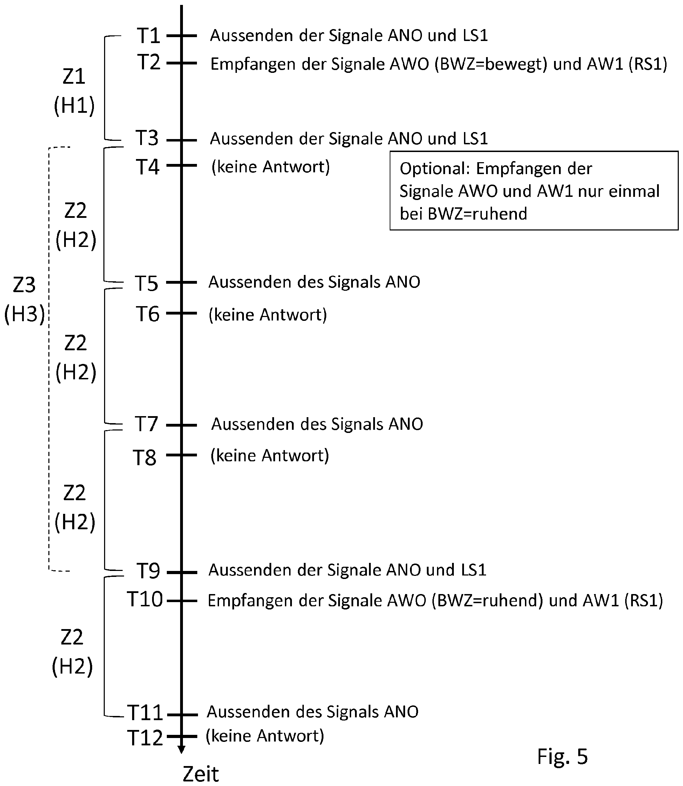

Es sei nun auf Figur 5 verwiesen, in der ein weiteres Ablaufdiagramm zum Veranschaulichen der Ansteuerung des Aussendens von Anfrage- bzw. Lokalisierungssignalen gemäß einer vierten Ausführungsform gezeigt ist. Diese vierte Ausführungsform ist der zweiten Ausführungsform sehr ähnlich, wobei hier eine zusätzliche Möglichkeit der fahrzeugseitigen Steuereinrichtung STE gezeigt werden soll, dass sie bei Ausbleiben der Antwortsignale (auf entsprechende Anfragesignale ANO) seitens des mobilen Identifikationsgebers IDG entscheiden kann, ob der Schlüssel bei erkannter Ruhe doch wieder ein Antwortsignal aussenden soll, oder nicht. Dabei kann die fahrzeugseitigen Steuereinrichtung STE zu einem beliebigen Zeitpunkt eine entsprechende Aufforderung zum Aussenden eines Antwortsignals aussenden. Es ist auch denkbar, dass eine entsprechende Aufforderung nach einer bestimmten Zeit ohne Antwortsignal oder seit dem Erkennen eines ruhenden Zustands des mobilen Identifikationsgebers ergeht.

In der Figur wird davon ausgegangen, dass sich der mobile Identifikationsgeber ab dem Zeitpunkt T3 in Ruhe befindet. Nach dem Empfang des Antwortsignals AW0 mit der Information, dass sich der mobilen Identifikationsgeber IDG in Ruhe befindet, beginnt ein Zeitintervall Z3 mit einer zugeordneten Häufigkeit H3 zu laufen. Da zu den Zeitpunkten T6 und T8 keine Antwort empfangen wurde, ergeht nun zum Zeitpunkt T9 (trotz des ruhenden Zustands des mobilen Identifikationsgebers) mit dem Aussenden des Anfragesignals ANO und Lokalisierungssignal LS1 eine Aufforderung an den mobilen Identifikationsgeber, wieder entsprechende Antwortsignale zu senden. Wie zu bzw. zwischen den Zeitpunkten T1 und T2 wird das Anfragesignal ANO und Lokalisierungssignal LS1 empfangen, und ein jeweiliges entsprechendes Antwortsignal erzeugt und an das Fahrzeug geschickt, das dieses zum Zeitpunkt T10 empfängt. Auf diese Weise kann die fahrzeugseitige Steuereinrichtung STE selbst bestimmen, wann sie die Präsenz bzw. den Ort des mobilen Identifikationsgebers überprüfen möchte, so dass auch bei vorübergehendem Ausbleiben einer Antwort des mobilen Identifikationsgebers der zuverlässige Betrieb der Zugangsvorrichtung gewährleistet werden kann.

Als mobiler Identifikationsgeber kann neben einem elektronischen Fahrzeugschlüssel auch ein anderes von einem Benutzer tragbares Gerät mit entsprechender beschriebener Funktionalität in Frage kommen, wie beispielsweise ein Mobiltelefon bzw. Smartphone, ein Tablet PC, eine Smart-Watch (intelligente Uhr), etc.

## Patentansprüche

1. Zugangsvorrichtung (ZV) für ein Fahrzeug (FZ), mit folgenden Merkmalen:
- einer fahrzeugseitigen Steuereinrichtung (STE)
∘ zum Aussenden von Anfragesignalen (ANO) an einen mobilen Identifikationsgeber (IDG) zum Abfragen von dessen Bewegungszustand (BWZ);
∘ wobei die fahrzeugseitige Steuereinrichtung (STE) ferner dafür eingerichtet ist, das Aussenden der Anfragesignale (ANO) an eine Antwort des mobilen Identifikationsgebers mit dessen Bewegungszustand oder an das Ausbleiben der Antwort anzupassen;
- einem mobilen Identifikationsgeber (IDG) umfassend:
∘ einen Bewegungssensor (BWS) zum Erfassen einer Bewegung des mobilen Identifikationsgebers (IDG)
∘ eine identifikationsgeberseitige Sende-/Empfangseinrichtung (SEI) zum:
+ Empfangen der fahrzeugseitigen Anfragesignale (LS1), und
+ Aussenden eines Antwortsignals mit dem Bewegungszustand (BWZ) des mobilen Identifikationsgebers (IDG) ansprechend auf zumindest ein Anfragesignal (ANO).
∘ eine identifikationsgeberseitige Steuereinrichtung (STI) zum Steuern des Aussendens der Antwortsignale (AWO, AW1),
**dadurch gekennzeichnet,**
**dass** die fahrzeugseitige Steuereinrichtung (STE) zu einem beliebigen Zeitpunkt oder nach Ablauf eines bestimmten Zeitintervalls (Z3) nach Erkennen eines bestimmten Bewegungszustands (BWZ) des mobilen Identifikationsgebers (IDG) ein Anfragesignal mit einer Aufforderung an den mobilen Identifikationsgeber (IDG) aussendet, durch das der mobile Identifikationsgeber (IDG) gezwungen wird, in jedem Fall ein Antwortsignal zurückzusenden.

2. Zugangsvorrichtung (ZV) nach Anspruch 1, bei der die identifikationsgeberseitige Steuereinrichtung (STI) dafür eingerichtet ist, das Aussenden eines Antwortsignals (AWO, AW1) nur bei Vorliegen eines bestimmten Bewegungszustands (BWZ) freizugeben.

3. Zugangsvorrichtung nach einem der Ansprüche 1 bis 2, bei der der mobile Identifikationsgeber (IDG) ferner aufweist:
eine identifikationsgeberseitige Zeitmesseinrichtung (ZMI) zum Erfassen der Zeit seit einer letzten vorbestimmten Bewegung des mobilen Identifikationsgebers (IDG).

4. Zugangsvorrichtung (ZV) nach einem der Ansprüche 1 bis 3, bei der die identifikationsgeberseitige Steuereinrichtung (STI) ferner dafür eingerichtet ist,
- als Bewegungszustand (BWZ) einen ruhenden Zustand des mobilen Identifikationsgebers (IDG) zu erkennen, wenn die erfasste Bewegung unterhalb eines vorbestimmten Schwellenwerts (SW) liegt, und
- als Bewegungszustand (BWZ) einen bewegten Zustand des mobilen Identifikationsgebers (IDG) zu erkennen, wenn die erfasste Bewegung oberhalb eines vorbestimmten Schwellenwerts (SW) liegt.

5. Zugangsvorrichtung (ZV) nach Anspruch 3 und 4, bei der die identifikationsgeberseitige Steuereinrichtung (STI) ferner dafür eingerichtet ist, den Bewegungszustand (BWZ) des mobilen Identifikationsgebers (IDG) als einen bewegten Zustand zu erkennen, wenn die erfasste Bewegung oberhalb eines vorbestimmten Schwellenwerts liegt und die von der identifikationsgeberseitige Zeitmesseinrichtung gemessene Zeit innerhalb eines vorbestimmten Zeitintervalls liegt.

6. Zugangsvorrichtung nach einem der Ansprüche 1 bis 5, bei der die fahrzeugseitige Steuereinrichtung (STE) ferner dafür eingerichtet ist, die Häufigkeit des Aussendens der Anfragesignale zu reduzieren, wenn als Bewegungszustand (BWZ) des mobilen Identifikationsgebers (IDG) ein ruhender Zustand empfangen worden ist.

7. Zugangsvorrichtung nach einem der Ansprüche 1 bis 6, bei der die fahrzeugseitige Steuereinrichtung (STE) ferner dafür eingerichtet ist, einen Dateninhalt oder die Signaldauer der Anfragesignale (ANO) zu reduzieren, wenn als Bewegungszustand (BWZ) des mobilen Identifikationsgebers (IDG) ein ruhender Zustand empfangen worden ist.

8. Zugangsvorrichtung nach Anspruch 6, bei dem die fahrzeugseitige Steuereinrichtung (STE) ferner dafür eingerichtet ist, die Häufigkeit des Aussendens der Anfragesignale wieder zu erhöhen, wenn nach Empfang eines ruhenden Zustands als Bewegungszustand (BWZ) des mobilen Identifikationsgebers (IDG) wieder ein bewegter Zustand empfangen worden ist.

9. Zugangsvorrichtung nach einem der Ansprüche 1 bis 8, bei der der mobile Identifikationsgeber (IDG), wenn er von einem ruhenden in einen bewegten Zustand übergeht, selbstständig ein Hinweissignal aussendet.

10. Zugangsvorrichtung nach einem der Ansprüche 1 bis 9, bei dem die fahrzeugseitige Steuereinrichtung (STE) dafür ausgelegt ist, zur Authentifizierung des mobilen Identifikationsgebers (IDG) mit zumindest einem Anfragesignal (ANO) eine Anforderung auszusenden, und ein Antwortsignal des mobilen Identifikationsgebers (IDG) mit einem Identifikationscode (CO) zu empfangen.

11. Zugangsvorrichtung nach einem der Ansprüche 1 bis 9, bei der die fahrzeugseitige Steuereinrichtung in Form der Anfragesignale oder als separate Lokalisierungssignals (LS1) Signale zur Positionsbestimmung des mobilen Identifikationsgebers aussendet.

12. Zugangsvorrichtung nach Anspruch 11, bei der nur bei einem erkannten bewegten Zustand des mobilen Identifikationsgebers (IDG) Lokalisierungssignale für eine Positionsbestimmung ausgesendet werden.

13. Zugangsvorrichtung nach einem der Ansprüche 1 bis 12, bei dem die fahrzeugseitige Steuereinrichtung (STE) ferner dafür eingerichtet ist, eine vorbestimmte Fahrzeugfunktion auszulösen, in Abhängigkeit des Empfangs eines bewegten Zustands des mobilen Identifikationsgebers (IDG) oder der Position des mobilen Identifikationsgebers (IDG) bezüglich des Fahrzeugs (FZ) oder des Empfangs eines gültigen Identifikationscodes (CO) des mobilen Identifikationsgebers (IDG), oder bei Vorliegen einer bestimmten Kombination der genannten Kriterien.

14. Fahrzeug (FZ) mit einer Zugangsvorrichtung (ZV) nach einem der Ansprüche 1 bis 13.

15. Verfahren zum Betreiben einer Zugangsvorrichtung (ZV) eines Fahrzeugs (FZ), mit folgenden Schritten:
- Aussenden von Anfragesignalen (ANO) an einen mobilen Identifikationsgeber (IDG) zur Abfrage von dessen Bewegungszustand (BWZ;
- Anpassen des Aussendens der Anfragesignale (ANO) an ein von dem mobilen Identifikationsgeber (IDG) empfangenes Antwortsignal (AWO) mit dem Bewegungszustand (BWZ) des mobilen Identifikationsgebers (IDG), oder in Abhängigkeit des Ausbleibens des Antwortsignals (AWO),
**gekennzeichnet durch**
ein Aussenden - zu einem beliebigen Zeitpunkt oder nach Ablauf eines bestimmten Zeitintervalls (Z3) nach Erkennen eines bestimmten Bewegungszustands (BWZ) des mobilen Identifikationsgebers (IDG) - eines Anfragesignals mit einer Aufforderung an den mobilen Identifikationsgeber (IDG), durch das der mobile Identifikationsgeber (IDG) gezwungen wird, in jedem Fall ein Antwortsignal zurückzusenden.

## Claims

1. Access device (ZV) for a vehicle (FZ), having the following features:
- an on-vehicle control apparatus (STE)
∘ for transmitting enquiry signals (ANO) to a mobile identification transmitter (IDG) in order to query the state of motion (BWZ) thereof;
∘ wherein the on-vehicle control apparatus (STE) is further configured to adapt the transmission of the enquiry signals (ANO) for a response from the mobile identification transmitter containing the state of motion thereof or for the absence of the response;
- a mobile identification transmitter (IDG) comprising:
∘ a motion sensor (BWS) for detecting a movement of the mobile identification transmitter (IDG)
∘ an identification-transmitter transmitting/receiving apparatus (SEI) for:
+ receiving the vehicle's enquiry signals (LS1), and
+ transmitting a response signal containing the state of motion (BWZ) of the mobile identification transmitter (IDG) in response to at least one enquiry signal (ANO)
∘ an identification-transmitter control apparatus (STI) for controlling the transmission of the response signals (AWO, AW1),
**characterized**
**in that** the on-vehicle control apparatus (STE) transmits to the mobile identification transmitter (IDG) an enquiry signal, containing a request, at any one time or after a specific time interval (Z3) has elapsed after a specific state of motion (BWZ) of the mobile identification transmitter (IDG) has been recognized, which enquiry signal forces the mobile identification transmitter (IDG) to return a response signal in any event.

2. Access device (ZV) according to Claim 1, in which the identification-transmitter control apparatus (STI) is configured to enable the transmission of a response signal (AWO, AW1) only when a specific state of motion (BWZ) exists.

3. Access device according to one of Claims 1 to 2, in which the mobile identification transmitter (IDG) further comprises:
an identification-transmitter timing device (ZMI) for recording the time since a last predetermined movement of the mobile identification transmitter (IDG).

4. Access device (ZV) according to one of Claims 1 to 3, in which the identification-transmitter control apparatus (STI) is further configured
- to recognize the state of motion (BWZ) to be a stationary state of the mobile identification transmitter (IDG) when the detected movement is below a predetermined threshold value (SW), and
- to recognize the state of motion (BWZ) to be a moving state of the mobile identification transmitter (IDG) when the detected movement is above a predetermined threshold value (SW).

5. Access device (ZV) according to Claims 3 and 4, in which the identification-transmitter control apparatus (STI) is further configured to recognize the state of motion (BWZ) of the mobile identification transmitter (IDG) as a moving state when the detected movement is above a predetermined threshold value and the time measured by the identification-transmitter timing device is within a predetermined time interval.

6. Access device according to one of Claims 1 to 5, in which the on-vehicle control apparatus (STE) is further configured to reduce the frequency of the transmission of the enquiry signals when a stationary state has been received as the state of motion (BWZ) of the mobile identification transmitter (IDG).

7. Access device according to one of Claims 1 to 6, in which the on-vehicle control apparatus (STE) is further configured to reduce a data content or the signal duration of the enquiry signals (ANO) when a stationary state has been received as the state of motion (BWZ) of the mobile identification transmitter (IDG).

8. Access device according to Claim 6, in which the on-vehicle control apparatus (STE) is further configured to increase the frequency of the transmission of the enquiry signals again when, after a stationary state has been received as the state of motion (BWZ) of the mobile identification transmitter (IDG), a moving state has been received again.

9. Access device according to one of Claims 1 to 8, in which the mobile identification transmitter (IDG) independently transmits a notification signal when it changes from a stationary to a moving state.

10. Access device according to one of Claims 1 to 9, in which the on-vehicle control apparatus (STE) is designed to authenticate the mobile identification transmitter (IDG) by using at least one enquiry signal (ANO) to transmit a request, and to receive a response signal from the mobile identification transmitter (IDG) containing an identification code (CO).

11. Access device according to one of Claims 1 to 9, in which the on-vehicle control apparatus transmits signals for determining the position of the mobile identification transmitter in the form of the enquiry signals or as separate localization signals (LS1).

12. Access device according to Claim 11, in which localization signals for position determination are transmitted only when a moving state of the mobile identification transmitter (IDG) is recognized.

13. Access device according to one of Claims 1 to 12, in which the on-vehicle control apparatus (STE) is further configured to trigger a predetermined vehicle function on the basis of the reception of a moving state of the mobile identification transmitter (IDG) or the position of the mobile identification transmitter (IDG) relative to the vehicle (FZ) or the reception of a valid identification code (CO) of the mobile identification transmitter (IDG), or if a specific combination of said criteria exists.

14. Vehicle (FZ) having an access device (ZV) according to one of Claims 1 to 13.

15. Method for operating an access device (ZV) of a vehicle (FZ), having the following steps:
- transmitting enquiry signals (ANO) to a mobile identification transmitter (IDG) in order to query the state of motion (BWZ) thereof;
- adapting the transmission of the enquiry signals (ANO) for a response signal (AWO) received from the mobile identification transmitter (IDG) and containing the state of motion (BWZ) of the mobile identification transmitter (IDG), or on the basis of the absence of the response signal (AWO),
**characterized by**
transmission to the mobile identification transmitter (IDG) of an enquiry signal, containing a request, at any one time or after a specific time interval (Z3) has elapsed after a specific state of motion (BWZ) of the mobile identification transmitter (IDG) has been recognized, which enquiry signal forces the mobile identification transmitter (IDG) to return a response signal in any event.

## Revendications

1. Arrangement d'accès (ZV) pour un véhicule (FZ), ayant les caractéristiques suivantes :
- un dispositif de commande côté véhicule (STE)
∘ destiné à émettre des signaux d'interrogation (ANO) vers un transmetteur d'identification mobile (IDG) afin d'interroger son état de mouvement (BWZ) ;
∘ le dispositif de commande côté véhicule (STE) étant en outre conçu pour adapter l'émission des signaux d'interrogation (ANO) à une réponse du transmetteur d'identification mobile avec son état de mouvement ou à l'absence de réponse ;
- un transmetteur d'identification mobile (IDG) comprenant :
∘ un capteur de mouvement (BWS) destiné à détecter un mouvement du transmetteur d'identification mobile (IDG)
∘ un dispositif d'émission/réception (SEI) côté transmetteur d'identification, destiné à :
+ recevoir les signaux d'interrogation côté véhicule (LS1), et
+ émettre un signal de réponse avec l'état de mouvement (BWZ) du transmetteur d'identification mobile (IDG) en réponse à au moins un signal d'interrogation (ANO),
∘ un dispositif de commande côté transmetteur d'identification (STI) destiné à commander l'émission des signaux de réponse (AWO, AW1),
**caractérisé en ce**
**que** le dispositif de commande côté véhicule (STE) émet, à un moment quelconque ou après l'écoulement d'un intervalle de temps (Z3) déterminé, après reconnaissance d'un état de mouvement (BWZ) déterminé du transmetteur d'identification mobile (IDG), un signal d'interrogation avec une invitation au transmetteur d'identification mobile (IDG), par lequel le transmetteur d'identification mobile (IDG) est contraint de renvoyer un signal de réponse dans tous les cas.

2. Arrangement d'accès (ZV) selon la revendication 1, avec lequel le dispositif de commande côté transmetteur d'identification (STI) est conçu pour n'autoriser l'émission d'un signal de réponse (AWO, AW1) qu'en présence d'un état de mouvement (BWZ) déterminé.

3. Arrangement d'accès selon l'une des revendications 1 à 2, avec lequel le transmetteur d'identification mobile (IDG) comprend en outre :
un dispositif de mesure du temps (ZMI) côté transmetteur d'identification, destiné à acquérir le temps écoulé depuis un dernier mouvement prédéterminé du transmetteur d'identification mobile (IDG).

4. Arrangement d'accès (ZV) selon l'une des revendications 1 à 3, avec lequel le dispositif de commande côté transmetteur d'identification (STI) est en outre conçu pour,
- reconnaître, comme état de mouvement (BWZ), un état au repos du transmetteur d'identification mobile (IDG) lorsque le mouvement détecté se trouve au-dessous d'une valeur de seuil (SW) prédéterminée, et
- reconnaître, comme état de mouvement (BWZ), un état en mouvement du transmetteur d'identification mobile (IDG) lorsque le mouvement détecté se trouve au-dessus d'une valeur de seuil (SW) prédéterminée.

5. Arrangement d'accès (ZV) selon les revendications 3 et 4, avec lequel le moyen de commande côté transmetteur d'identification (STI) est en outre adapté pour reconnaître l'état de mouvement (BWZ) du transmetteur d'identification mobile (IDG) comme un état en mouvement lorsque le mouvement détecté se trouve au-dessus d'une valeur de seuil prédéterminée et que le temps mesuré par le dispositif de mesure de temps côté transmetteur d'identification est compris dans un intervalle de temps prédéterminé.

6. Arrangement d'accès selon l'une des revendications 1 à 5, avec lequel le dispositif de commande côté véhicule (STE) est en outre conçu pour réduire la fréquence d'émission des signaux d'interrogation lorsqu'un état au repos a été reçu comme état de mouvement (BWZ) du transmetteur d'identification mobile (IDG).

7. Arrangement d'accès selon l'une des revendications 1 à 6, avec lequel le dispositif de commande côté véhicule (STE) est en outre conçu pour réduire un contenu de données ou la durée de signal des signaux d'interrogation (ANO) lorsqu'un état au repos a été reçu comme état de mouvement (BWZ) du transmetteur d'identification mobile (IDG).

8. Arrangement d'accès selon la revendication 6, avec lequel le dispositif de commande côté véhicule (STE) est en outre conçu pour augmenter de nouveau la fréquence d'émission des signaux d'interrogation lorsqu'un état en mouvement a de nouveau été reçu après la réception d'un état au repos comme état de mouvement (BWZ) du transmetteur d'identification mobile (IDG).

9. Arrangement d'accès selon l'une des revendications 1 à 8, avec lequel le transmetteur d'identification mobile (IDG), lorsqu'il passe d'un état au repos à un état en mouvement, émet de manière autonome un signal de notification.

10. Arrangement d'accès selon l'une des revendications 1 à 9, avec lequel le dispositif de commande côté véhicule (STE) est conçu pour émettre une requête en vue d'authentifier le transmetteur d'identification mobile (IDG) avec au moins un signal d'interrogation (ANO), et pour recevoir un signal de réponse du transmetteur d'identification mobile (IDG) avec un code d'identification (CO).

11. Arrangement d'accès selon l'une des revendications 1 à 9, avec lequel le dispositif de commande côté véhicule émet, sous la forme des signaux d'interrogation ou sous la forme d'un signal de localisation (LS1) séparé, des signaux servant à déterminer la position du transmetteur d'identification mobile.

12. Arrangement d'accès selon la revendication 11, avec lequel des signaux de localisation ne sont émis pour une détermination de position que dans le cas d'un état en mouvement reconnu du transmetteur d'identification mobile (IDG).

13. Arrangement d'accès selon l'une des revendications 1 à 12, avec lequel le dispositif de commande côté véhicule (STE) est en outre conçu pour déclencher une fonction de véhicule prédéterminée, en fonction de la réception d'un état en mouvement du transmetteur d'identification mobile (IDG) ou de la position du transmetteur d'identification mobile (IDG) par rapport au véhicule (FZ) ou de la réception d'un code d'identification (CO) valide du transmetteur d'identification mobile (IDG), ou en présence d'une combinaison déterminée des critères mentionnés.

14. Véhicule (FZ) comprenant un arrangement d'accès (ZV) selon l'une des revendications 1 à 13.

15. Procédé pour faire fonctionner un arrangement d'accès (ZV) d'un véhicule (FZ), comprenant les étapes suivantes :
- émission de signaux d'interrogation (ANO) vers un transmetteur d'identification mobile (IDG) afin d'interroger son état de mouvement (BWZ) ;
- adaptation de l'émission des signaux d'interrogation (ANO) à un signal de réponse (AWO) reçu par le transmetteur d'identification mobile (IDG) avec l'état de mouvement (BWZ) du transmetteur d'identification mobile (IDG), ou en fonction de l'absence du signal de réponse (AWO),
**caractérisée par**
une émission - à un moment quelconque ou après l'écoulement d'un intervalle de temps (Z3) déterminé après reconnaissance d'un état de mouvement (BWZ) déterminé du transmetteur d'identification mobile (IDG) - d'un signal d'interrogation avec une invitation au transmetteur d'identification mobile (IDG), par lequel le transmetteur d'identification mobile (IDG) est contraint de renvoyer un signal de réponse dans tous les cas.
